(19) Europäisches Patentamt
European Patent Office
Office européen des brevets

(11) Veröffentlichungsnummer: **0 043 373**
**B1**

(12) **EUROPÄISCHE PATENTSCHRIFT**

(45) Veröffentlichungstag der Patentschrift: **11.06.86**

(51) Int. Cl.⁴: **C 21 B 13/14**

(21) Anmeldenummer: **81900045.6**

(22) Anmeldetag: **17.12.80**

(86) Internationale Anmeldenummer: **PCT/AT 80/00036**

(87) Internationale Veröffentlichungsnummer: **WO 81/01715 (25.06.81 Gazette 81/15)**

# (54) VERFAHREN UND VORRICHTUNG ZUM KONTINUIERLICHEN REDUZIEREN UND SCHMELZEN VON METALLOXYDEN UND/ODER VORREDUZIERTEN METALLISCHEN MATERIALIEN.

(30) Priorität: **18.12.79 AT 7981/79**

(43) Veröffentlichungstag der Anmeldung: **13.01.82 Patentblatt 82/2**

(45) Bekanntmachung des Hinweises auf die Patenterteilung: **11.06.86 Patentblatt 86/24**

(84) Benannte Vertragsstaaten: **DE FR GB LU SE**

(56) Entgegenhaltungen:
**FR - A - 766 167**
**FR - A - 1 208 270**
**FR - A - 2 236 951**
**FR - A - 2 272 177**
**US - A - 1 758 786**
**US - A - 1 864 593**
**US - A - 2 500 553**
**US - A - 2 526 659**

(73) Patentinhaber: **VOEST-ALPINE Aktiengesellschaft, Friedrichstrasse 4, A-1011 Wien (AT)**

(72) Erfinder: **SULZBACHER, Horst, Dirnböckweg 5, A-8700 Leoben (AT)**

(74) Vertreter: **Kretschmer, Adolf, Dipl.-Ing. et al, Schottengasse 3a, A-1014 Wien (AT)**

**EP 0 043 373 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung bezieht sich auf ein Verfahren zum kontinuierlichen Reduzieren und Schmelzen eines Einsatzmaterials aus Metalloxyden, insbesondere Erzen, bzw. weitgehend vorreduzierten metallischen Materialien, insbesondere Eisenschwamm, gegebenenfalls mit Zuschlagstoffen wie Schlackenbildnern, Flußmitteln und Kohlenstoffträgern, sowie eine Vorrichtung zur Durchführung dieses Verfahrens.

Neben der Stahlerzeugung durch an einen Hochofenprozeß angeschlossene Frischverfahren haben Direktreduktionsverfahren bereits große Bedeutung erlangt. Bei derartigen Direktreduktionsverfahren wird in der Regel in einem Schacht- oder Drehrohrofen Eisenschwamm gewonnen, welcher in der Folge durch Schmelzen und Legieren zu Stahl verarbeitet werden kann. Ein wesentlicher Vorteil der Direktreduktionsverfahren gegenüber dem Hochofenprozeß besteht darin, daß diese Verfahren nicht an hochwertige Brennstoffe als Energieträger, wie beispielsweise Koks, gebunden sind. Nachteilig bei der Aufarbeitung von Erzen durch Direktreduktionsverfahren ist jedoch der immer noch vergleichsweise größere Gesamtenergiebedarf gegenüber dem Hochofenprozeß mit nachgeschaltetem Frischverfahren. Den bekannten Schmelzreduktionsverfahren ist der Nachteil eigen, daß wegen der relativ niedrigen Teilverbrennungsenergie, welche bei der Verbrennung unter Kohlenstoffüberschuß entsteht, entweder nur Kohlen mit hohen Gehalten an Kohlenstoff und geringen Anteilen an Wasser und flüchtigen Bestandteilen eingesetzt werden können oder daß die fehlende Schmelz- und Reduktionswrme durch Zusatz von elektrischer Energie kompensiert werden muß.

Eine weitere nachteilige Eigenheit dieser Prozesse liegt darin, daß die Abgase aus den Schmelzgefäßen mit Temperaturen zwischen 1000° und 1800° C austreten und bei der anschließenden Reinigung bzw. Verwertung einen großen apparativen Aufwand erfordern.

Für die Erschmelzung und Endreduktion von stückigem Eisenschwamm in einem Schmelzgefäß kann so vorgegangen werden, daß Kohlenstaub und Sauerstoff teilverbrannt werden und die nötige Energie zum Schmelzen und Reduzieren liefern. Unvergaste Kohlepartikel dienen als Reduzent bzw. Kohlungsmittel. Das bei der Teilverbrennung bzw. bei der direkten Reduktion der restlichen Eisenoxyde entstehende Gas kann nach vorhergehender Reinigung und Kühlung in einem gesonderten Reduktionsschacht zur Erzeugung von direkt reduziertem Eisen (Eisenschwamm) verwendet werden. Das metallisierte Produkt aus diesem Gasreduktionsaggregat soll einen sehr niedrigen Restsauerstoffgehalt haben und in das Schmelzgefäß mit einer Temperatur zwischen 750° und 850° C chargiert werden. Vorreduziertes Feinerz kann aber auch zusammen mit Kohlenstaub in ein Schmelzgefäß eingebracht werden, in welchem der Eisenträger aufgeschmolzen und die Restoxyde direkt reduziert werden. Das dabei entstehende CO- und $H_2$-haltige Gas wird entweder beim Austritt aus dem Schmelzgefäß mit Sauerstoff zu $CO_2$ und $H_2O$ verbrannt oder es dient nach der Kühlung und Reinigung zur Vorreduktion des Feinerzes in einer gesonderten Wirbelschichtanlage. Da bei diesen Prozessen entweder gar keine oder nur in geringfügigem Maß Schmelz- und Reduktionswärme aus der Verbrennung anfällt, ist es erforderlich, einen Großteil der notwendigen Energie über elektrischen Strom einzubringen. Erst durch dieses zusätzliche Energieeinbringen ist es möglich, die hohe Energiekonzentration, welche bei diesen Verfahren notwendig ist, zu erzielen.

Sämtliche Schmelzreduktionsprozesse haben einen wesentlich höheren Gesamtenergieverbrauch als das Hochofenverfahren, aber auch der Nettoenergiebedarf (nach Abzug der Gasgutschrift) liegt im Vergleich deutlich darüber, weil entweder der Anteil an direkter Reduktion höher oder weil die Ausnutzung der chemischen und fühlbaren Wärme des Gases nicht so ideal wie bei der konservativen Roheisentechnologie ist. Dazu kommt noch, daß fast in allen Fällen bei der Kohleverbrennung Probleme mit der Asche gegeben sind, weil diese in relativ großen Mengen im Abgas vorkommt und bei den hohen Temperaturen zu erweichen beginnt.

Aus der US-A 2 500 553 kann ein Verfahren entnommen werden, bei welchem Eisenerze zusammen mit kohlenstoffhaltigen Materialien einem Drehrohrofen aufgegeben werden. Die Beschickung bewegt sich unter Trocknung und Reduktion auf ein Schmelzaggregat zu, in welchem das Aufschmelzen und die Trennung von Schlacke und Metall erfolgt.

Die Erfindung zielt nun darauf ab, ein Verfahren der eingangs genannten Art zu schaffen, bei welchem auch minderwertige Brennstoffe eingesetzt werden können, und bei welchem die eingesetzte Energie in hohem Maße genützt werden kann. Gleichzeitig sollen die bei der Verwendung von minderwertigen Brennstoffen größer werdenden Abgasprobleme sicher beherrscht werden. Das Verfahren soll darüberhinaus auch für das Erschmelzen von hochschmelzenden Metallen bzw. Legierungen, wie beispielsweise FeMn, FeCr oder FeSi, sowie vorreduziertes Manganerz od.dgl., geeignet sein. Zur Lösung dieser Aufgabe besteht die Erfindung im wesentlichen darin, daß das Einsatzmaterial in einem Schmelzgefäß durch vollständige Verbrennung von Brennstoffen, insbesondere festen Brennstoffen wie Steinkohlen- oder Braunkohlenstaub über ihre Schmelztemperatur erhitzt werden, daß den heißen Verbrennungsabgasen Kohlenstoff, insbesondere Kohlenstaub, zugeführt wird, wobei die im wesentlichen aus $CO_2$ und $H_2O$ bestehenden

heißen Verbrennungsabgase teilweise zu CO und $H_2$ umgesetzt und abgekühlt werden, daß dieses Umsetzungsprodukt mit Temperaturen von über 800° C im Gegenstrom durch das dem Schmelzgefäß zuzuführende Einsatzmaterial hindurchgeleitet wird, wobei das zuzuführende Einsatzmaterial über den gesamten Querschnitt der Zuführungsöffnung eingeschoben wird, und hierauf bei Temperaturen von über 100° C, vorzugsweise etwa 150° C, abgezogen, getrocknet und gereinigt wird und daß vorzugsweise das getrocknete und gereinigte Gas zumindest teilweise den Brennern im Schmelzgefäß und/oder gemeinsam mit dem Kohlenstoff den heißen Abgasen zugeführt wird. Um den Einsatz von minderwertigen festen Brennstoffen für die Schmelzreduktion bzw. das Aufschmelzen der vorreduzierten metallischen Materialien in wirtschaftlicher Weise zu ermöglichen, muß die in den heißen Verbrennungsabgasen enthaltene Energie sinnvoll verwendet werden. Die Verbrennungsabgase treten je nach dem gewählten Brennstoff meistens mit Temperaturen von 1300° C bis 2000° C aus dem Schmelzgefäß aus und die unmittelbare Verwendung der fühlbaren Wärme dieser Verbrennungsabgase zum Vorwärmen von vorreduzierten metallischen Materialien würde zu einem oberflächlichen Anschmelzen und damit zum Ausbilden einer dichten gasundurchlässigen Schicht führen. Darüberhinaus weist beispielsweise Eisenschwamm in der Regel einen nicht hinreichenden Kohlenstoffgehalt auf, um nach dem Einschmelzen im Roheisen einen C-Gehalt von etwa 3 - 4 % erzielen zu können. Bei dieser Ausgangssituation wird erfindungsgemäß vorgeschlagen, den heißen Verbrennungsabgasen Kohlenstoff zuzusetzen, wobei sich nach den Gleichungen

I $C + H_2O \rightarrow H_2 + CO$ und

II $C + CO_2 \rightarrow 2\,CO$,

stark endotherme Reaktionen ergeben, mit welchen zum einen eine Abkühlung der Verbrennungsabgase, beispielsweise auf etwa 800° bis 1000° C bei Einsatz von weitgehend vorreduziertem Material, bzw. auf etwa 1000° bis 1400°90 C bei Einsatz von Metalloxyden, insbesondere Erzen, bzw. eines Möllers mit Zuschlagstoffen, erzielt wird und zum anderen eine reduzierende Atmosphäre geschaffen wird, deren nunmehr chemische Energie beispielsweise in einer nachfolgenden Verwendung des Gases als Reduktionsmittel oder als Energieträger genutzt werden kann. Es wird somit die fühlbare Wärme für den Aufbau von chemischer Energie ausgenutzt und dadurch, daß die Gase abgekühlt werden, wird die Ausbildung einer gasundurchlässigen Schicht bei der Aufgabe des vorreduzierten metallischen Materials vermieden. Die Mindesttemperatur von 800° C stellt hiebei eine hinreichende Vorwärmung der zu schmelzenden Materialien sicher und durch das Aufblasen von überschüssigem Kohlenstoff kann in einfacher Weise der gewünschte Aufkohlungsgrad erreicht werden. Zu diesem Zweck wird erfindungsgemäß der Kohlenstoff heißen Verbrennungsabgasen in Form von weitgehend wasserfreiem Braunkohlenstaub oder Holzkohlenstaub zugeführt. Die heißen Verbrennungsabgase, welche nach den obigen Gleichungen I und II umgesetzt und abgekühlt wurden, werden nun durch das dem Schmelzgefäß zuzuführende Einsatzmaterial durchgeleitet, wobei sie ihre fühlbare Wärme an das Einsatzmaterial bzw. die Charge abgeben. Gleichzeitig wird auf Grund der reduzierenden Eigenschaften dieses Gases beispielsweise bei Einsatz von Eisenschwamm mit niedrigen Metallisationsgraden oder bei Einsatz von Gemischen aus Eisenschwamm und Erz ein höherer Metallisationsgrad erzielt. Die aufzugebende Charge übt hiebei eine Filterwirkung aus und es können flugaschereiche Kohlen im Schmelzgefäß verbrannt werden und der weitaus größte Teil der Schadstoffe bereits durch die Charge abgefiltert werden. Die durch die Charge abgekühlten Abgase werden erfindungsgemäß bei Temperaturen von über 100° C, vorzugsweise etwa 150° C, nach dem Durchströmen der Charge abgezogen, um ein Kondensieren von Wasser in der Charge zu vermeiden.

Das bei Temperaturen von etwa 150° C abgezogene Verbrennungsabgas kann nach weiterer Abkühlung und anschließender Abscheidung des Wassers in den Gasreinigern erfindungsgemäß in einfacher Weise als Trägergas für das Einblasen von Kohlenstoff in die heißen Verbrennungsabgase eingesetzt werden. Auf diese Weise wird ein Einblasen von Luft und damit eine oxidierende Atmosphäre vermieden.

Erfindungsgemäß werden die Verbrennungsabgase durch die endotherme Reaktion nach den Gleichungen I und II für das Erschmelzen von weitgehend vorreduziertem Einsatzmaterial bei Temperaturen zwischen 1100° und 1600° C insbesondere 1300° bis 1500° C, durch das Eindüsen von Kohlenstoff auf Temperaturen von 800° bis 1000° C heruntergekühlt, oder für das Reduzieren und Schmelzen eines Metalloxyd enthaltenden Einsatzmaterials ausgehend von Temperaturen zwischen 1700° und 2000° C durch Eindüsen von Kohlenstoff auf Temperaturen von 1000° bis 1400° C abgekühlt. Die entsprechend dem jeweiligen Verwendungszweck abgekühlten Verbrennungsgase werden nun durch die Einsatzmaterialien hindurchgeleitet.

In vorteilhafter Weise wird den heißen Verbrennungsabgasen Kohlenstoff in einem für die Aufkohlung des Bades geeigneten überschuß zugeführt, wobei das nach dem Durchströmen des dem Schmelzgefäß zuzuführenden Einsatzmaterials abgezogene und gereinigte Gas als Trägergas für das Einblasen von Kohlenstoff zu den heißen Verbrennungsabgasen eingesetzt werden kann. Zur überwindung des relativ hohen Druckverlustes in der Beschickungseinrichtung wird vorzugsweise so vorgegangen, daß Sauerstoff und Brennstoff in das Schmelzgefäß

unter überatmosphärischem Druck eingedüst und/oder daß am aufgabeseitigen Ende des Zuführungsraumes für das Einsatzmaterial ein unteratmosphärischer Druck angewendet wird.

Die erfindungsgemäße Vorrichtung zur Durchführung dieses Verfahrens weist ein Schmelzgefäß und wenigstens einen in dieses Schmelzgefäß mündenden Brenner auf und ist im wesentlichen dadurch gekennzeichnet, daß das Schmelzgefäß an seiner Oberseite dichtend in zumindest einen sich im wesentlichen horizontal erstreckenden Zuführungsraum übergeht, an welchen eine von einem Kolbenschieber gebildete Beschickungseinrichtung für die Einsatzmaterialien anschließt, in dessen Arbeitsraum eine verschließbare Öffnung eines Möllerbunkers mündet, daß im Bereich des Anschlusses des Zuführungsraumes an das Schmelzgefäß eine Düse für das Einblasen von Kohlenstoff angeordnet ist, und daß am anderen Ende des Zuführungsraumes eine Gasaustrittsöffnung vorgesehen ist, an welche eine Gasreinigungsund Trocknungseinrichtung und vorzugsweise ein Saugzuggebläse angeschlossen ist, welches mit Leitungen zur Düse für den Kohlenstaub und/oder den Brennern der Schmelzkammer in Verbindung steht. Der sich im wesentlichen horizontal erstreckende Zuführungsraum ist dabei als röhrenartiger Schacht ausgebildet, dessen Achse senkrecht zur Schmelzgefäßachse steht. Dieser röhrenartige Schacht wird nach dem Prinzip des Stoßofens beschickt, das heißt ein,vorzugsweise hydraulisch betätigter, Kolben schiebt die Charge, beispielsweise den Eisenschwamm oder die Metalloxyde, mit geringer Geschwindigkeit ein Stück nach vor, wodurch kontinuierlich eine kleine Materialmenge am schmelzgefäßseitigen Ende der Röhre in die Schmelze fällt. Das Chargieren wird dadurch vereinfacht, daß in den Arbeitsraum des Kolbenschiebers eine verschließbare öffnung eines Möllerbunkers mündet. Nach einem gewissen Zeitraum wird der Kolben zurückgezogen und die freiwerdende öffnung wird wieder mit Material gefüllt. Hiebei kann als eine Art Rostbelag zuerst Kalkstein und dann die Charge, z.B. Eisenschwamm, aufgegeben werden, wodurch die Durchgasung verbessert wird.

Das im Schmelzgefäß vollständig oberhalb der Schmelzbadoberfläche verbrannte aus $CO_2$ und $H_2O$ bestehende Abgas, strahlt einen Teil seiner Wärme an das darunter liegende Schlacken- und Roheisenbad ab und zieht nach oben ab. Bevor es den nach oben geschlossenen Schmelzraum über einen oder mehrere im wesentlichen horizontale, mit Einsatzmaterial gefüllte Zuführungsräume verläßt, wird es mit dem über eine Düse in den Schmelzraum eingeblasenen Kohlenstaub mit niedrigen Gehalten an $H_2O$ und flüchtigen Bestandteilen verwirbelt. Das Abgas setzt sich hiebei nach den eingangs genannten Gleichungen I und II endotherm um, wodurch die Abgastemperatur in der gewünschten Weise abgesenkt werden kann. Beim Austritt aus dem Schmelzgefäß trifft das mit Aschepartike1 und unvergastem Kohlenstoff vermischte Gas auf das Einsatzmaterial im horizontalen Zuführraum, wobei die festen oder teigigen Partikel aus dem Gas gefiltert werden und weitere endotherme Umsetzreaktionen erfolgen, da auch neben der Vergasung bereits die direkte Reduktion ($FeO + C \rightarrow Fe + CO$) abläuft. Es ist anzunehmen, daß durch diese stark wärmeverbrauchenden Reaktionen die Gastemperatur im Material sehr rasch auf 800°C abnimmt. Wenn das Einsatzmaterial von Möllermaterial bzw. Metalloxyden gebildet ist, erfolgt neben der Vorwärmung des Einsatzes, welcher aus stückigem Erz und Zuschlägen bestehen kann, auch eine indirekte Reduktion in der Beschickungseinrichtung.

Die Länge des horizontalen Schachtes muß so berechnet werden, daß das entstandene Gas den größten Teil seiner fühlbaren Wärme an das im Gegenstrom geförderte Material abgibt, und mit einer Temperatur von ca. 150° C aus dem Schacht abgesaugt werden kann. Diese Temperatur ist relativ leicht erzielbar, da sie sowohl über die Schubgeschwindigkeit des Kolbens, die Brennstoffmenge, als auch über die Zusatzmenge an Kohlenstoff für die Umsetzung der heißen Verbrennungsabgase nach den Gleichungen I und II geregelt werden kann. Das aus $H_2$, CO, $H_2O$ und $CO_2$ bestehende Abgas kann nach dem Absaugen gereinigt werden, wobei der meist relativ hohe $H_2O$-Anteil herausgewaschen werden kann, und sofern dies sinnvoll erscheint, auch der $CO_2$-Anteil entfernt werden kann. Das abgesaugte und gereinigte Gas kann unter Vorwärmung für die Verbrennung im Schmelzgefäß rückgeführt werden, oder aber als hochwertiges Gas für andere Gasverbraucher verwendet werden.

Der vorgewärmte Möller, der in das Schmelzgefäß fällt, besteht aus Kalk zur Schlackenbildung, unvergasten Kohleteilchen, welche zur Aufkohlung dienen, herausgefilterten Flugaschepartikeln und der weitgehend vorreduzierten Charge, beispielsweise Eisenschwamm. Der Vorreduktionsgrad des in das Schmelzgefäß fallenden Materials ist von der Aufenthaltsdauer des Erzes in der Beschickungseinrichtung und der Gaszusammensetzung nach der Vergasung abhängig. Je geringer der Sauerstoffgehalt des metallisierten Produktes ist, umso niedriger ist der spezifische Energieverbrauch und umso höher ist die Schmelzleistung im Schmelzgefäß. Der Kohlungs- und Reduktionskohlenstoff für die direkte Reduktion wird in erster Linie über die Kohlenstaubdüse zudosiert, kann aber auch mit dem Einsatz eingebracht werden, so daß sich der Kohlenstoffgehalt im Roheisen relativ leicht einstellen läßt.

Im Falle, daß Braunkohlen mit einem niederen Heizwert verwendet werden, besteht die Möglichkeit, daß trotz genügender Schmelzwärme und hoher Verbrennungstemperatur in der Schmelzzone die eingebrachte Energie nicht ausreicht, die

Vergasungsreaktionen ablaufen zu lassen. Um das Energieeinbringen zu erhöhen, kann eine Gasrückführung und Vorwärmung des Gases, eine Vorwärmung der Kohle für die Vergasung, eine Vorwärmung des Sauerstoffes und ein Einbringen von zusätzlicher Energie über Plasmabrenner, wobei sich das gereinigte Abgas vorzüglich als Träger eignet, vorgesehen werden. Bei Verwendung von Steinkohlen mit hohem Heizwert und den obengenannten Zusatzmaßnahmen ist es möglich, auch Metalle, welche wesentlich höhere Schmelztemperaturen und Reduktionsenergien benötigen, als Roheisen, unter gleichzeitiger Verringerung des Strom- und Kohlenstoffbedarfes herzustellen. FeCr, FeMn und vor allem FeSi (geringe SiO Verluste) können als Beispiel für eine Reihe anderer Metalle und Legierungen gelten.

Vor allen Dingen bei Verwendung von minderwertigen Kohlen ist mit dem Anfall von großen Gasmengen zu rechnen. Es können in diesem Fall mehrere horizontale Zuführungsräume bzw. Chargierräume vorgesehen werden, und es können auch mehrere Kohlenstaubdüsen am übergang des Schmelzgefäßes in die Beschickungseinrichtung erforderlich sein. In manchen Fällen kann es sinnvoll sein, daß ein Teil der Schmelz- und Reduktionswärme durch elektrische Energie eingebracht wird, wobei vor allem Plasmafackeln mit Vorteil eingesetzt werden können, welche das Kreislaufgas erhitzen. Für ein entsprechendes Ofengefäß ist dann eine abwechselnde Anordnung von Kohlenstaubbrennern und Plasmabrennern vorzusehen. Allerdings besteht auch die Möglichkeit, in ein Schmelzgefäß mittels Elektroden die notwendige Energie einzubringen.

Die vollständige Verbrennung der Brennstoffe mit Sauerstoff im Schmelzgefäß ist für die Erzielung der hohen Abgastemperaturen von wesentlicher Bedeutung, da durch eine Teilverbrennung, beispielsweise im Fall von Kohlenstoff,

$$(C + \frac{1}{2} O_2 \longrightarrow CO)$$

pro kg C nur 9600 kJ freiwerden, während bei der vollkommenen Verbrennung ($C + O_2 \rightarrow CO_2$) je kg 33200 kJ abgegeben werden. Erst durch die vollständige Verbrennung läßt sich bei minderwertigen Brennstoffen die für die nachfolgende Umsetzung bei gleichzeitiger Aufkohlung des Einsatzstoffes erforderliche hohe Abgastemperatur erzielen. Nach der Reinigung des aus dem Zuführungsraum des Schmelzgefäßes abgezogenen Gases wird nach dem Auswaschen des Wassers in einer Gaswaschanlage ein sauberes Gas, welches z.B. als hochwertiges Brenngas den festen Brennstoffen zur Verbrennung in den Brennern des Schmelzgefäßes zugesetzt werden kann, erhalten.

Die Erfindung wird nachfolgend an Hand eines in der Zeichnung schematisch dargestellten Ausführungsbeispieles einer erfindungsgemäßen Schmelzreduktionsanlage näher erläutert.

In dieser zeigt 1 einen Möllerbunker, welcher durch Schieber 2 und 3 an seiner Ober- und Unterseite verschließbar ist. Das untere Ende des Möllerbunkers 1 mündet in den Arbeitsraum 4 eines Kolbenschiebers 5, durch dessen Bewegung in Richtung des Pfeiles 6 das aus dem Möllerbunker eintretende Einsatzmaterial, beispielsweise Eisenschwamm oder Eisenoxyde und Kalkstein, in den Zuführungsraum 7 des Schmelzgefäßes 8 eingebracht werden kann. Der Zuführungsraum 7 weist einen Rostbelag 9 aus Kalkstein auf und über diesem Belag befindet sich die Charge 10. An das dem Kolben 5 benachbarte Ende des Zuführungsraumes 7 ist ein Abzug 11 für die Abgase angeschlossen.

Das Schmelzgefäß 8 wird durch einen Brenner 12 mit Stein- oder Braunkohlenstaub und Sauerstoff beschickt, wobei die Flamme mit 13 bezeichnet ist. Die Abgase, welche im wesentlichen $CO_2$ und $H_2O$, sowie auf Grund der hohen Verbrennungstemperaturen von etwa 1900° auch durch Dissoziation entstehendes CO und $H_2$ enthalten. steigen in Richtung des Pfeiles 14 zusammen mit Flugasche auf. An der Übergangsstelle zum Zuführungsraum 7 wird über eine Kohlenstaubdüse 15 Kohlenstaub eingeblasen, wobei die Verbrennungsabgase auf Temperaturen zwischen 800 und 1400° abgekühlt werden, und teilweise zu CO und $H_2$ umgesetzt werden. Ein Teil des Kohlenstaubes gelangt auch auf die Oberfläche 16 der Charge und gelangt mit dieser Charge in die Schmelze 17. Über dieser Schmelze 17 schwimmt eine Schlackenschicht 18 auf. Die abgekühlten und umgesetzten Verbrennungsabgase werden nun durch die Charge 10 hindurchgeleitet und am Abzug II bei Temperaturen von etwa 150°C abgezogen und einer Gasreinigungs- und Trocknungsstufe 19 zugeführt. Über ein Saugzuggebläse 20 werden die gereinigten und getrockneten Abgase über Leitungen 21 den Kohlenstaubdüsen 15 als Trägergas und über eine Leitung 22 dem Brenner 12 als Verbrennungsgas zugeführt. Über eine Leitung 23 kann das Gas auch weiteren Gasverbrauchern zugeführt werden. Während im Brenner 12 auch wasserreiche Braunkohle verarbeitet werden kann, empfiehlt es sich den Kohlenstaubdüsen 15 höherwertige Kohlenstoffträger, insbesondere pulverisierte weitgehend trockene Braunkohle oder Holzkohlenstaub zuzuführen, um die gewünschte rasche Umsetzung der Abgase zu erzielen.

Die Erfindung wird nachfolgend an Hand von Untersuchungen über den Energieverbrauch im Rahmen des erfindungsgemäßen Verfahrens näher erläutert.

**Beispiel 1**: Schmelzen von vorreduziertem Material.

**Annahmen**: Verwendung einer Kohle von H = 8.400 kJoule/kg zum Schmelzen und Holzkohle für Hochtemperaturvergasung.

**Analyse der Braunkohle**: 34 % C, 15 % flüchtige Bestandteile (4 % $H_2$), 3 % Asche, 48 % Feuchte.

**Analyse der Holzkohle**: 72 % C, 15 % flüchtige Bestandteile (4 % $H_2$), 1 % Asche, 8 % Feuchte.

Der Energiebedarf für Schmelzen von Roheisen und Schlacke und Reduzieren aus dem Möller (direkt reduziertes Eisen (DRE) + Kalk) beträgt ungefähr 2,1 GJoule/t Roheisen (RE), die Roheisentemperatur soll 1500° C und der Wäremverlust ca. 04 GJoule/t Roheisen betragen. Bei der vollkommenen Verbrennung der Braunkohle mit Sauerstoff liegt die theoretische Verbrennungstemperatur bei etwa 2100° C, die praktische Verbrennungstemperatur wird bei etwa 1900° C liegen. Die Dissoziation von $H_2O$ und $CO_2$ liegt zwar bei hohen Flammentemperaturen immer vor, wird aber in der Berechnung vernachlässigt, da diese sonst zu kompliziert werden würde. Die bei der vollkommenen Verbrennung von 1 kg Braunkohle mit angeführter Analyse mit Sauerstoff entstehende Gasmenge ist 1,69 $Nm^3$ (37% $CO_2$, 63 % $H_2O$. Die dafür benötigte Sauerstoffmenge beträgt 0,8 $Nm^3$ $0_2$/kg Kohle.

**Energiebedarf für Aufschmelzen von Roheisen und Schlacke, Reduktion und Ofenverluste**: Der Energiebedarf für das Erwärmen des Eisenschwammes von 800° bis 1500° C, die Reduktion, Schlackenschmelzen und Aufkohlung beträgt ca. 1,3 GJoule/t RE, für Ofenverluste nimmt man etwa 0,4 GJoule/t RE an; der Gesamtenergiebedarf für das Schmelzen im Schmelzgefäß beläuft sich daher auf ungefähr 1,7 GJoule/t RE. Unter der Annahme, daß 50 % der über die vollkommene Verbrennung eingebrachten Wärme im Schmelzgefäß (Schmelzen, Reduzieren) Verlustwärme verbraucht werden und der Rest im Abgas als fühlbare Wärme vorliegt, ist die Gesamtenergie, welche über die Braunkohle eingebracht werden muß, 3,4 GJoule/t RE, das sind 400 kg Braunkohle mit einem Hu von 8.400 kJoule (2000 kcal/kg).

**Abgasmenge, welche bei der Verbrennung entsteht**: 680 $Nm^3$ (252 $Nm^3$ $CO_2$, 428 $Nm^3$ $H_2O$).

Die angenommene Gastemperatur vor der Hochtemperaturvergasung beträgt ca 1250° C

**Hochtemperaturvergasung**: Vereinfacht wird angenommen, daß die fühlbare Wärme von 6 $Nm^3$ $CO_2$ bei 1250° C die Reaktionswärme für die Boudouardreaktion ($C + CO_2 \rightarrow 2\ CO$) liefert, und daß sich daraus bei 800° C ein Gas von 5 $Nm^3$ $CO_2$ und 2 $Nm^3$ CO bildet. Beim Wasserdampf ($H_2O + C \rightarrow H_2 + CO$) ergeben sich aus 6,5 $Nm^3$ $H_2O$, 5,5 $Nm^3$ $H_2O$ und 1 $Nm^3$ CO + 1 $Nm^3$ $H_2$. Das bei der Vergasung entstehende Gas fällt in einer Menge von 790 $Nm^3$ an (45 % $H_2O$, 28 % $CO_2$, 19 % CO, 8 % $H_2$). Die fühlbare Wärme dieses Gases bei 800° C beträgt 1,4 GJoule/Nm.

Für die Tonne Roheisen benötigte Möllermenge stehen also 1,2 GJoule (fühlbare Wärme bei 800° C - fühlbare Wärme bei 150° C) zur Verfügung; genügend Wärme, um den Möller auf 800° C aufzuheizen.

Nimmt man an, daß der Wasserdampfanteil des entstehenden Gases in der Gaswäsche herausgewaschen wird, dann lautet die Gaszusammensetzung des gewaschenen Gases bei einer Menge von 426 $Nm^3$ - 49 % $CO_2$, 35 % CO, 16 % $H_2$.

HU = 6200 kJoule/$Nm^3$.

**Für die Aufkohlung des Roheisens und zur Vergasung ist folgende Menge an Kohlenstoff notwendig**:

Für die Aufkohlung: 30 kg/t RE (der Rest ca. 1 % ist im Eisenschwamm vorhanden).

Für die Vergasung:

($C + CO_2 \rightarrow 2\ CO$) 42 $Nm^3$ CO, 0,53 kgC/$Nm^3$ $CO_2$ = 22 kg C, ($H_2O + C \rightarrow H_2 + CO$) 66$Nm^3$ $H_2O$, 0,53 kgC/$Nm^3$ $H^2O$ = 35kg C, Kohlenstoff für Vergasung und Aufkohlung... 87 kg/t RE, Bedarf an einzudüsender Kohle (z.B. Holzkohle)...120 kg/t RE.

**Energiebilanz pro Tonne Roheisen**:

400 kg Braunkohle (Hu 8.400 kJoule/kg) 3,36 GJoule

120 kg Holzkohle (Hu 27.700 kJoule/kg) 3,32 GJoule

320 $Nm^3$ Sauerstoff (0,7 kWh/$Nm^3$) 0,81 GJoule

Energieeintrag 7,49 GJoule

1 t Roheisen fühlbare Wärme 1,25 GJoule

40 kg Kohlenstoff im Roheisen

(H = 33.500 kJoule) 1,34 GJoule

200 kg Schlacke 0,33 GJoule

426 $Nm^3$ Gas (Hu = 6200 kJoule/$Nm^3$) 2,67 GJoule

Energieaustrag 5,59 GJoule

Wirkungsgrad: 0,74 % bei Weiterverwendung des entstehenden Gases.

Der theoretische Energiebedarf beträgt bei Weiterverwendung des Gases 1,9 kJoule/t RE, das sind ca. 530 kWh/t RE. Wird das dabei entstehende Gas abgefackelt, dann ist der Energieverbrauch 4,57 GJoule = 1260 kWh/t RE.

Für die Herstellung von 1 t Stahl aus Eisenschwamm im Elektrolichtbogenofen benötigt man ca. 600 kWh an Energie in Form von Strom. Rechnet man den Strombedarf auf Primärenergie, d.h. Braunkohle für Verstromung um, dann liegt der Energiebedarf bei etwa 1500 kWh/t Rohstahl. Da der Energieverbrauch bei den Sauerstofffrischverfahren 100 kWh/t Rohstahl nicht überschreitet, wäre die Rohstahlerzeugung nach dem angegebenen Verfahren auch bei Nichtausnutzung des entstehenden Gases im Vergleich mit der Stahlerzeugung aus Eisenschwamm im Elektrolichtbogenofen bereits konkurrenzfähig (1260 kWh/t RE, 0,9 t RE/$_{RSt}$ + 100 kWh/$_{tRSt}$ = 1234 kWh/R4).

**Beispiel 2**: Erschmelzung von Roheisen aus Eisenerz unter Verwendung einer Steinkohle mit einem Hu = 25.000 kJoule/kg zur Erzeugung der Schmelz- und Reduktionsenergie und Braunkohlekoks für die Vergasung, Aufkohlung und direkte Reduktion.

Reduktion über Gasphase (indirekte Reduktion) = 60 %.

Reduktion über festen Kohlenstoff (direkte Reduktion) = 40 %.

Analyse der Steinkohle:C = 60 %, flüchtige

Bestandteile = 25 %, Asche = 9 %, H 0 = 5 %.

Analyse des Braunkohlenkokses: C = 86,5 %, flüchtige Bestandteile = 3 %, $H_2O$ = 3 %, Asche = 6,5 %.

Energiebedarf je Tonne Roheisen für Schmelzen, Reduzieren und Wärmeverluste in Schmelzzone 2,9 GJoule

Energiebedarf für Materialvorwärmung, Wasserstoffreduktion und Verluste in der horizontalen Röhre 1,3 GJoule

Verluste an fühlbarer Wärme des Abgases (200° C) 0,4 GJoule

Gesamtenergiebedarf zum Schmelzen 4,6 GJoule

Es wird vorausgesetzt, daß 80 % des bei der Verbrennung von 300 kg Steinkohle entstandenen Abgases, welches aus 70 % $CO_2$ und 30 % $H_2O$ besteht, durch Eindüsen von Braunkohlenkoks zu CO und $H_2$ umgesetzt werden.

Abgasmenge aus Verbrennung von 300 kg Steinkohle 534 $Nm^3$ Abgas

Energiebedarf zur Reformierung von 80 % des Gases 6900 kJoule/$Nm^3$ Abgas = 2,9 GJoule/t Roheisen.

**Gesamtenergiebedarf für Schmelzen, Reduzieren, Reformieren, Wärmeverluste** 4,6 GJoule + 2,9 GJoule = 7,5 GJoule/t Roheisen.

**Energiebedarf durch Verbrennung von 300 kg Steinkohle**

25.000 kJoule/kg x 300 kg Steinkohle = 7,5 GJoule/t Roheisen.

Verbrauch an Braunkohlenkoks für:

Reformierung 270 kg

Direkte Reduktion 140 kg

Aufkohlung 50 kg

Gesamtverbrauch 460 kg/t Roheisen.

**Gesamtzusammensetzungen**:

| | Im Schmelzraum | | Nach Vergasung | | Nach Gaswäscher | |
|---|---|---|---|---|---|---|
| | % | $Nm^3$/t Roheisen | % | $Nm^3$/t Roheisen | % | $Nm^3$/t Roheisen |
| Co | 30 | 224 | 80 | 950 | 57 | 640 |
| $H_2$ | | | 11 | 128 | 9 | 100 |
| $CO_2$ | 50 | 374 | 6 | 75 | 34 | 380 |
| $H_2O$ | 20 | 160 | 3 | 32 | | |
| | | 758 $Nm^3$ | | 1 135 $Nm^3$ | | 1 120 $Nm^3$ |

Hu des Gases nach dem Gaswäscher 8.100 kJoule/Nm

Gesamtheizwert von 1120 $Nm^3$ Abgas 9,1 GJoule/t Roheisen.

Energieverbrauch für 1 t Roheisen aus Erz:

| | |
|---|---|
| 300 kg Steinkohle (25 000 kJoule/kg) | 7,5 GJoule |
| 460 kg Braunkohlenkoks (29 000 kJoule/kg) | 13,5 GJoule |
| 393 $Nm^3$ Sauerstoff (0,7 kWh) | 1,0 GJoule |
| Summe | 22,0 GJoule |
| — Energiegutschrift für chem. Wärme im Abgas — | 9,1 GJoule |
| Nettoenergieverbrauch | 12,9 GJoule. |

Der Nettoenergieverbrauch eines modernen Hochofens liegt ohne den Energieaufwand für Kokserzeugung und Agglomeration bei 13,2 GJoule/t Roheisen.

Das erfindungsgemäße Verfahren zeichnet sich durch eine gute Überschaubarkeit und Regelung des metallurgischen Prozesses aus. Schadstoffemissionen können durch die Filterwirkung von Eisenschwamm wesentlich herabgesetzt werden, und es wird gleichzeitig ein minderwertiger Brennstoff, wie beispielsweise Braunkohle, in einen hochwertigen Energieträger (Gas) umgesetzt. Es können Braunkohlen mit hohen Wassergehalten eingesetzt werden und es besteht in einfacher Weise die Möglichkeit einer Verbindung des erfindungsgemäßen Verfahrens mit Feststoff-Direktreduktionsverfahren. Auch die Verarbeitung von aschereichen Kohlen ist ohne Problem möglich, da die Ascheteilchen aus dem Abgas durch Eisenschwamm herausgefiltert werden und in der Schlacke aufschmelzen. Es entstehen auch keine Probleme bei der Gasreinigung durch Teer oder andere flüssige Kohlenwasserstoffe.

Das erfindungsgemäße Verfahren läßt sich kontinuierlich durchführen und das Prozeßprinzip läßt sich auch beim Erschmelzen von Ferrolegierungen und Nichteisenmetallen in einfacher Weise anwenden. Im Zuführungsraum des Schmelzgefäßes ergibt sich darüber hinaus die Möglichkeit einer Gasreduktion, wodurch Eisenschwamm mit niedrigen Metallisationsgraden oder Gemische aus Eisenschwamm und Erz verarbeitet werden könnten.

## Patentansprüche

1. Verfahren zum kontinuierlichen Reduzieren und Schmelzen eines Einsatzmaterials aus Metalloxyden, bzw. weitgehend vorreduzierten metallischen Materialien, gegebenenfalls mit Zuschlagstoffen wie Schlackenbildnern, Flußmitteln und Kohlenstoffträgern, bei dem das Einsatzmaterial in einem Schmelzgefäß durch vollständige Verbrennung von Brennstoffen über seine Schmelztemperatur erhitzt wird, den heißen Verbrennungsabgasen Kohlenstoff, insbesondere Kohlenstaub, zugeführt wird, wobei die im wesentlichen aus $CO_2$ und $H_2O$ bestehenden heißen Verbrennungsabgase teilweise zu CO und $H_2$ umgesetzt und abgekühlt werden, und dieses Umsetzungsprodukt mit Temperaturen von über 800°C im Gegenstrom durch das dem Schmelzgefäß zuzuführende Einsatzmaterial hindurchgeleitet wird, wobei das zuzuführende Einsatzmaterial über den gesamten Querschnitt der Zuführungsöffnung eingeschoben wird, und hierauf bei Temperaturen von über 100°C abgezogen, getrocknet und gereinigt wird.

2. Verfahren nach Anspruch 1, dadurch gekennzeichnet, daß als Einsatzmaterial Erz verwendet wird.

3. Verfahren nach Anspruch 1, dadurch gekennzeichnet, daß als Einsatzmaterial Eisenschwamm verwendet wird.

4. Verfahren nach einem der Ansprüche 1 bis 3, dadurch gekennzeichnet, daß als Brennstoffe feste Brennstoffe, wie Steinkohlen- oder Braunkohlenstaub, verwendet werden.

5. Verfahren nach einem der Ansprüche 1 bis 4, dadurch gekennzeichnet, daß das gasförmige Umsetzungsprodukt bei etwa 150° C abgezogen, getrocknet und gereinigt wird.

6. Verfahren nach einem der Ansprüche 1 bis 5, dadurch gekennzeichnet, daß das getrocknete und gereinigte Gas zumindest teilweise den Brennern im Schmelzgefäß und/ oder gemeinsam mit dem Kohlenstoff den heißen Abgasen zugeführt wird.

7. Verfahren nach einem der Ansprüche 1 bis 6, dadurch gekennzeichnet, daß den heißen Verbrennungsabgasen Kohlenstoff in Form von weitgehend wasserfreiem Braunkohlenstaub oder Holzkohlenstaub zugeführt wird.

8. Verfahren nach einem der Ansprüche 1 bis 7, dadurch gekennzeichnet, daß den heißen Verbrennungsabgasen Kohlenstoff in einem für die Aufkohlung des Bades geeigneten Überschuß zugeführt wird.

9. Verfahren nach einem der Ansprüche 1 bis 8, dadurch gekennzeichnet, daß das nach dem Durchströmen des dem Schmelzgefäß zuzuführenden Einsatzmaterials abgezogene und gereinigte Gas als Trägergas für das Einblasen von Kohlenstoff zu den heißen Verbrennungsabgasen eingesetzt wird.

10. Verfahren nach einem der Ansprüche 1 bis 9, dadurch gekennzeichnet, daß die vollständige Verbrennung im Schmelzgefäß zur Erzielung von Temperaturen zwischen 1800° und 2000° C gesteuer wird, und daß die Verbrennungsabgase für das Erschmelzen von weitgehend vorreduziertem Einsatzmaterial bei Temperaturen zwischen 1100° und 1600° C durch das Eindüsen von Kohlenstoff auf Temperaturen von 800° bis 1000° C heruntergekühlt werden, und daß das mit Kohlenstoff umgesetzte Verbrennungsabgas mit Temperaturen von 800° bis 1000° C durch im wesentlichen aus weitgehend vorreduzierten metallischen Materialien bestehende Einsatzmaterialien hindurchgeleitet wird und bei Temperaturen von etwa 150° C abgezogen wird.

11. Verfahren nach Anspruch 10, dadurch gekennzeichnet, daß die Verbrennungsabgase für das Erschmelzen von weitgehend vorreduziertem Einsatzmaterial bei Temperaturen zwischen 1300° und 1500° C durch das Eindüsen von Kohlenstoff auf Temperaturen von 800° bis 1000° C heruntergekühlt werden.

12. Verfahren nach einem der Ansprüche 1 bis 9, dadurch gekennzeichnet, daß die vollständige Verbrennung im Schmelzgefäß zur Erzielung von Temperaturen zwischen 1800° und 2000° C gesteuert wird, und daß die Verbrennungsabgase für das Reduzieren und Schmelzen eines Metalloxyd enthaltenden Einsatzmaterials ausgehend von Temperaturen zwischen 1700° und 2000° C durch Eindüsen von Kohlenstoff auf Temperaturen von 1000° bis 1400° C abgekühlt werden, und daß das mit Kohlenstoff umgesetzte Verbrennungsabgas mit Temperaturen von 1000° bis 1400° C durch im wesentlichen aus Metalloxyden bestehende Einsatzmaterialien hindurchgeleitet wird und bei Temperaturen von etwa 150° C abgezogen wird.

13. Verfahren nach einem der Ansprüche 1 bis 12, dadurch gekennzeichnet, daß Sauerstoff und Brennstoff in das Schmelzgefäß unter überatmosphärischem Druck eingedüst und/oder daß am aufgabeseitigen Ende des Zuführungsraumes für das Einsatzmaterial ein unteratmosphärischer Druck angewendet wird.

14. Vorrichtung zur Durchführung des Verfahrens nach einem der Ansprüche 1 bis 13 mit einem Schmelzgefäß und wenigstens einem in dieses Schmelzgefäß mündenden Brenner, dadurch gekennzeichnet, daß das Schmelzgefäß (8) an seiner Oberseite dichtend in zumindest einen sich im wesentlichen horizontal erstreckenden Zuführungsraum (7) übergeht, an welchen eine von einem Kolbenschieber gebildete Beschickungseinrichtung (5) für die Einsatzmaterialien anschließt, in dessen Arbeitsraum (4) eine verschließbare Öffnung eines Möllerbunkers (1) mündet, daß im Bereich des Anschlusses des Zuführungsraumes (7) an das Schmelzgefäß (8) eine Düse (15) für das Einblasen von Kohlenstoff angeordnet ist, und daß am anderen Ende des Zuführungsraumes (7) eine Gasaustrittsöffnung (11) vorgesehen ist, an welche eine Gasreinigungs- und Trocknungseinrichtung (19) und vorzugsweise ein Saugzuggebläse (20) angeschlossen ist, welches mit Leitungen (21) zur Düse (15) für den Kohlenstaub und/oder den Brennern (12) der Schmelzkammer (8) in Verbindung steht.

15. Vorrichtung nach Anspruch 14, dadurch gekennzeichnet, daß der Zuführungsraum (7) zumindest an seiner Unterseite mit Kalkstein belegt ist.

**Revendications**

1. Procédé de reduction et de fusion en continu d'une charge constituée d'oxydes métalliques ou de matières métalliques préréduites dans une large mesure, éventuellement avec des additions telle, que des agents de scorification fondants et agents d'apport de carbone, dans lequel on chauffe la charge au-dessus de sa température de fusion dans un récipient de fusion, par combustion complète de combustibles, on ajoute du carbone, en particulier du poussier de charbon, aux gaz résiduaires de combustion chauds,les gaz résiduaires de combustion chauds constitués essentiellement de $CO_2$ et $H_2O$ réagissant alors en partie pour donner CO et $H_2$ et se refroidissant, et on fait passer ce produit de réaction, qui est à une température supérieure à 800° C, à contrecourant à travers la charge à introduire dans le récipient de fusion, la charge à introduire étant poussée sur toute la section transversale de l'ouverture d'introduction et on l'évacue ensuite à une

température supérieure à 100°C, on le sèche et on l'épure.

2. Procédé selon la revendication 1, caractérisé en ce que l'on emploie comme charge un minerai.

3. Procédé selon la revendication 1, caractérisé en ce que l'on emploie comme charge de l'éponge de fer.

4. Procédé selon l'une quelconque des revendications 1 à 3, caractérisé en ce que l'on emploie comme combustibles des combustibles solides comme du poussier du houille ou du poussier de lignite.

5. Procédé selon l'une quelconque des revendications 1 à 4, caractérisé en ce que le produit de réaction gazeux est évacué à environ 150°C, séché et épuré.

6. Procédé selon l'une quelconque des revendications 1 à 5, caractérisé en ce que le gaz séché et épuré est introduit au moins partiellement dans les brûleurs du récipient de fusion et/ou dans les gaz résiduaires chauds en même temps que le carbone.

7. Procéde selon l'une quelconque des revendications 1 à 6, caractérisé en ce que l'on introduit dans les gaz résiduaires de combustion chauds du carbone sous la forme de poussier de lignite ou de poussier de charbon de bois exempt d'eau dans une large mesure.

8. Procédé selon l'une quelconque des revendications 1 à 7, caractérisé en ce que l'on introduit dans les gaz residuaires de combustion chauds du carbone en excès approprie a la carburation du bain.

9. Procédé selon l'une quelconque des revendications 1 à 8, caractérisé en ce qu'après avoir traversé la charge à introduire dans le récipient de fusion, le gaz évacué et épuré est utilisé comme gaz vecteur pour l'injection de carbone dans les gaz résiduaires de combustion chauds.

10. Procédé selon l'une quelconque des revendications 1 à 9, caractérisé en ce que l'on conduit la combustion complete dans le récipient de fusion de façon à obtenir des temperatures comprises entre 1800 et 2000°C, et en ce que pour la fusion d'une charge préréduite dans une large mesure à des températures comprises entre 1100 et 1800°C, on refroidit les gaz résiduaires de combustion jusqu'à des températures de 800 à 1000°C, par injection de carbone et en ce que l'on fait passer le gaz résiduaire de combustion qui a réagi avec le carbone et qui est à des températures de 800 à 1000°C, à travers la charge constituée de matières métalliques préréduites dans une large mesure et on l'évacue à environ 150°C.

11. Procédé selon la revendication 10, caractérisé en ce que pour la fusion d'une charge préréduite dans une large mesure à des températures comprises entre 1300 et 1500°C, on refroidit les gaz résiduaires de combustion jusqu'à des temperatures de 800 à 1000°C par injection de carbone.

12. Procédé selon l'une quelconque des revendications 1 à 9, caractérisé en ce que l'on conduit la combustion complete dans l'appareil de fusion de façon à obtenir des températures comprises entre 1800 et 2000°C et en ce que pour la reduction et la fusion d'une charge contenant de l'oxyde métallique à partir de températures comprises entre 1700 et 2000°C, on refroidit les gaz résiduaires de combustion jusqu'à des températures de 1000 à 1400°C par injection de charge et en ce que l'on fait passer le gaz résiduaire de combustion qui a réagi avec du carbone et qui est à des températures de 1000 à 1400°C, à travers la charge constituée essentiellement d'oxydes métalliques et on l'évacue à des températures d'environ 150°C.

13. Procédé selon l'une quelconque des revendications 1 à 12, caractérisé en ce que l'oxygène et le combustible sont injectés dans le récipient de fusion sous une pression supérieure à la pression atmosphérique et/ou en ce qu'à l'extrémité de la zone d'introduction de la charge qui est située du côté du chargement, on emploie une pression inférieure à la pression atmosphérique.

14. Dispositif pour mettre en oeuvre le procédé selon l'une quelconque des revendications 1 à 13, comportant un récipient de fusion et au moins un brûleur débouchant dans ce récipient de fusion, caractérisé en ce que sur sa face superieure, par une transition étanche, le récipient de fusion (8) prend la forme d'au moins une zone d'introduction (7) s'étendant dans une direction essentiellement horizontale, à laquelle est raccordé un dispositif de chargement (5) de la charge formé d'un tiroir à piston dans le compartiment de travail (4) duquel débouche l'ouverture obturable d'une trémie de stockage de charge (1), en ce que dans la région du raccordement de la zone d'alimentation (7) au récipient de fusion (8) est disposé un injecteur (15) pour l'injection de carbone et en ce qu'à l'autre extrémité de la zone d'introduction (7) est prévue une ouverture de sortie du gaz (11) à laquelle sont raccordés une installation d'épuration et de séchage du gaz (19) et de préference un ventilateur d'aspiration (20) qui est relié à l'injecteur (15) de poussier de charbon par les conduites (21) et/ou au brûleur de la chambre de fusion (8).

15. Dispositif selon la revendication 14, caractérisé en ce que la zone d'introduction (7) est revétue de calcaire au moins sur sa face inférieure.

**Claims**

1. A process for continuously reducing and melting a charge of material comprised of metal oxides or metallic materials pre-reduced to a large extent, resp., optionally together with additives such as slag formers, fluxes and carbon carriers, in which the charge of material is heated to a temperature above its melting temperature in a melting receptacle by complete combustion of fuel, carbon, particularly coal dust, is supplied to

the hot effluent gas whereby the hot effluent gas substantially comprised of $CO_2$ and $H_2O$ is partially converted to CO and $H_2$ and cooled, and the reaction product is passed at a temperature exceeding 800°C in countercurrent flow through the charge of material to be supplied to the melting receptacle, whereat the charge of material to be supplied is put in over the whole cross-section of the charging port, and thereupon said reaction product is discharged at a temperature exceeding 100°C, dried and purified.

2. The process as claimed in claim 1, characterised in that ore is used as charge of material.

3. The process as claimed in claim 1, characterised in that iron sponge is used as charge of material.

4. The process as claimed in any one of claims 1 to 3, characterised in that solid fuels such as pit coal dust or brown coal dust are used as fuel.

5. The process as claimed in any one of claims 1 to 4, characterised in that the gaseous reaction product is discharged at a temperature of about 150°C dried and purified.

6. The process as claimed in any one of claims 1 to 5, characterised in that the dried and purified gas is supplied at least partially to the burners in the melting receptabcle and/or together with the carbon is supplied to the hot effluent gas.

7. The process as claimed in any one of claims 1 to 6, characterised in that carbon is supplied to the hot effluent gas in the form of largely dehydrated brown coal dust or charcoal dust.

8. The process as claimed in any one of claims 1 to 7, characterised in that carbon is supplied to the hot effluent gas in an excess amount sufficient for carburising the melt.

9. The process as claimed in any one of claims 1 to 8, characterised in that the gas discharged and purified after having passed the charge of material to be supplied to the melting receptacle is utilised as carrier gas for injecting carbon into the hot effluent gas.

10. The process as claimed in any one of claims 1 to 9, characterised in that the complete combustion within the melting receptacle is controlled at obtaining temperatures between 1800 and 2000°C, that the effluent gas for melting a largely pre-reduced charge of material at temperatures between 1100 and 1600°C is cooled down to to temperatures between 800 and 1000°C by injecting carbon, and that the effluent gas reacted with carbon is passed through a charge of material substantially comprised of largely pre-reduced metallic materials at temperatures between 800 and 1000°C and is discharged at a temperature of about 150°C.

11. The process as claimed in claim 10, characterised in that for melting a largely pre-reduced charge of material at temperatures between 1300 and 1500°C the effluent gas is cooled down to temperatures between 800 and 1000°C by injecting carbon.

12. The process as claimed in any one of claims 1 to 9, characterised in that the complete combustion within the melting receptacle is controlled at obtaining temperatures between 1800 and 2000°C, that the effluent gas for reducing and melting a charge of material containing metal oxide starting at temperatures between 1700 and 2000°C is cooled down to temperatures between 1000 and 1400°C by injecting carbon, and that the effluent gas reacted with carbon is passed through a charge of material substantially comprised of metal oxides at temperatures between 1000 and 1400°C and is discharged at a temperature of about 150°C.

13. The process as claimed in any one of claims 1 to 12, characterised in that oxygen and fuel are injected into the melting receptacle under superatmosperic pressure and/or that a subatmospheric pressure is applied at the side of the charging end of the supply space for the charge of material.

14. A device for carrying out the process as claimed in any one of claims 1 to 13, including a melting receptacle and at least one burner opening into said melting receptacle, characterised in that the melting receptacle (8) at its upper end is in sealed communication with at least one supply space (7) extending substantially in a horizontal direction and having supply equipment (5) for the charge of material formed by a pusher piston, a closable opening of a burden bunker (1) opening into the working space of said pusher piston, that at the connecting area between the supply space (7) and the melting receptacle (8) a nozzle (15) for injecting carbon is arranged and that at the other end of the supply space (7) a gas exit opening (11) is provided to which a gas purifying and drying device (19) and preferably a suction blower (20) are connected, said suction blower being in connection with conduits (21) leading to the nozzle (15) for the coal dust and/or the burners (12) of the melting receptacle (8).

15. The device as claimed in claim 14, characterised in that the supply space (7) is clad with limestone at least at its bottom side.

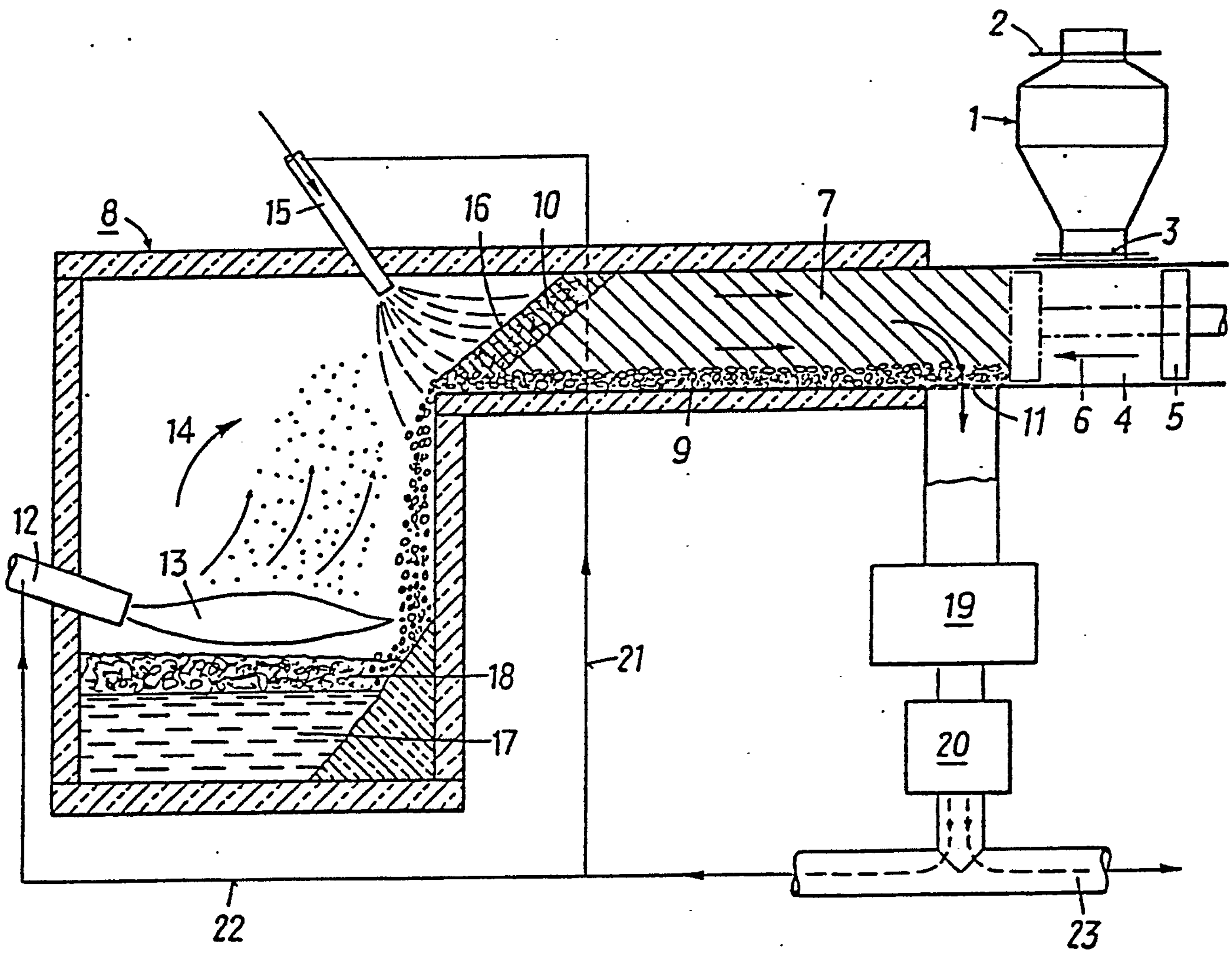
2
1
3
8
15
16
10
7
14
12
13
9
11
6
4
5
19
18
21
17
20
22
23